# FASCICULE DE BREVET EUROPEEN

(11) **EP 2 193 948 B1**
(45) Date de publication et mention de la délivrance du brevet: **27.03.2013**
(21) Numéro de dépôt: 09306123.2
(22) Date de dépôt: 23.11.2009
(51) Int. Cl.: B60K 11/08, B62D 25/08

(54) **Ensemble de carrosserie de véhicule automobile munie de volets montés en rotation**
Karosserieeinheit eines Kraftfahrzeugs, die mit schwenkbaren Klappen ausgestattet ist
Automobile body unit equipped with rotatable flaps

(30) Priorité: 04.12.2008 FR 0858263
(43) Date de publication de la demande: 09.06.2010
(73) Titulaire: Faurecia Bloc Avant, 92000 Nanterre (FR)
(72) Inventeur: Imbert, Didier, 70200, FROIDETERRE (FR)
(74) Mandataire: Domenego, Bertrand

(56) Documents cités:
- EP-A- 1 522 448
- EP-A- 1 637 442
- DE-A-102004 026 419
- DE-U-202004 010 030
- GB-A- 2 082 520

## Description

La présente invention concerne un ensemble de carrosserie de véhicule automobile, du type comprenant au moins une pièce de carrosserie destinée à s'étendre sur la face avant d'une caisse de véhicule automobile.

L'invention concerne également un véhicule automobile comprenant un tel ensemble. DE 102004026419A divulgue un ensemble selon le préamble de la revendication 1.

La peau de pare-choc d'un véhicule automobile comprend généralement une ouverture centrale munie d'une grille permettant le passage de l'air de l'extérieur du véhicule automobile vers les organes du véhicule présents sous le capot afin de permettre un refroidissement de ces organes.

Afin de moduler ce refroidissement en fonction des besoins des organes, il est connu de prévoir des volets pilotés, montés en rotation, permettant de laisser l'air passer ou d'obturer l'ouverture afin de limiter le flux d'air pénétrant par la peau de pare-choc.

Les volets pilotés sont montés en rotation sur un cadre structurel disposé derrière l'ouverture et fixé sur la face interne de la peau de pare-choc ou sur la caisse du véhicule automobile. Le document FR-2 821 817 décrit par exemple un tel système de volets pilotés.

Cependant, un tel cadre structurel est une pièce rapportée qu'il convient de monter sur la peau de pare-choc ou sur la caisse du véhicule automobile au moment du montage dudit véhicule. La gestion de cette pièce rapportée (emballage, stockage, transport, montage sur la ligne de montage du véhicule automobile) entraîne une augmentation des coûts et du temps de montage du véhicule automobile et complexifie la ligne de montage.

L'un des buts de l'invention est de pallier ces inconvénients en proposant un ensemble de carrosserie munie de volets pilotés de structure simplifiée.

A cet effet, l'invention concerne un ensemble de carrosserie selon la revendication 1 et un véhicule selon la revendication 7.

Le cadre structurel étant réalisé d'un seul tenant avec une pièce de carrosserie nécessaire à la réalisation de la face avant du véhicule automobile, il n'est pas nécessaire de prévoir une pièce supplémentaire à fixer sur la peau de pare-choc, ce qui permet de simplifier la ligne de montage et évite la gestion d'une pièce rapportée supplémentaire.

Selon d'autres caractéristiques de l'ensemble de carrosserie :
- une branche s'étend sensiblement au centre du cadre sensiblement perpendiculairement aux volets, une première pluralité de volets étant fixée à un bord du cadre et à un côté de ladite branche et une deuxième pluralité de volets étant fixée à un autre bord du cadre et à l'autre côté de ladite branche, lesdits volets étant montés en rotation autour d'axes respectifs sensiblement transversaux ;
- la pièce de carrosserie est un renfort de plastron destiné à s'étendre sous l'avant du capot du véhicule automobile ;
- l'ensemble de carrosserie comprend au moins un actionneur fixé à ladite pièce de carrosserie, ledit actionneur étant agencé pour entraîner la rotation des volets ;
- un connecteur électrique est relié audit actionneur ;
- l'actionneur est fixé sur la face interne de la pièce de carrosserie ; et
- l'ensemble de carrosserie comprend en outre une peau de pare-choc, ladite peau s'étendant au moins en partie au-dessus de la pièce de carrosserie.

Selon d'autres caractéristiques du véhicule automobile :
- l'actionneur est connecté au système électrique dudit véhicule automobile ; et
- la rotation des volets est commandée par le système électrique du véhicule automobile en fonction des besoins de refroidissement des organes du véhicule automobile présents sous le capot dudit véhicule.

D'autres aspects et avantages de l'invention apparaîtront à la lecture de la description qui suit, donnée à titre d'exemple et faite en référence aux dessins annexés, dans lesquels :
- la Fig. 1 est une représentation schématique en perspective d'un ensemble de carrosserie selon l'invention dans son environnement,
- la Fig. 2 est une représentation schématique en coupe de l'ensemble de carrosserie selon l'invention.

Dans la description, les termes « longitudinal » et « transversal » sont définis par rapport aux directions usuelles d'un véhicule automobile monté, c'est-à-dire que la direction longitudinale est définie selon la longueur du véhicule et la direction transversale selon la largeur du véhicule.

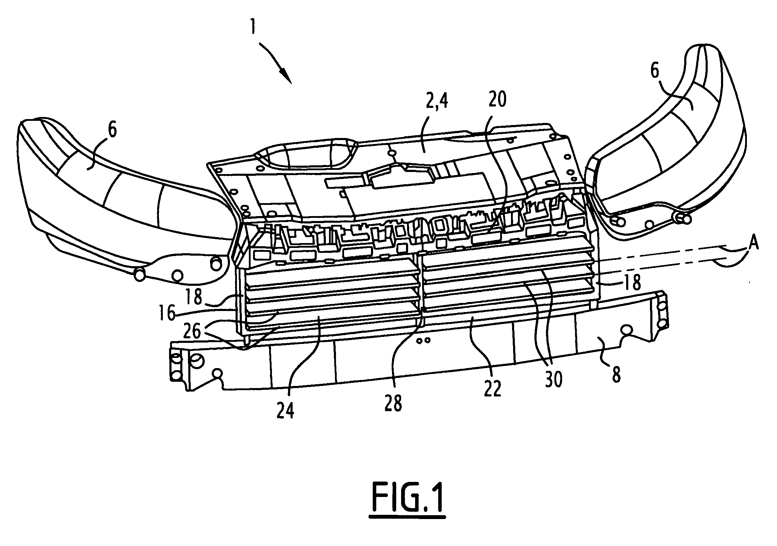

En référence à la Fig. 1, on décrit un ensemble de carrosserie 1, comprenant une pièce de carrosserie 2, par exemple réalisée en matière plastique. La pièce de carrosserie 2 est un renfort de plastron 4 destiné à s'étendre sous l'avant du capot du véhicule automobile (non représenté) entre les projecteurs optiques 6 du véhicule. Le renfort de plastron 4 est par exemple fixé en appui sur une poutre transversale 8 du bloc avant d'un véhicule automobile ou fixé à des moyens de fixation prévus sur les projecteurs 6 ou fixé sur une pièce structurelle située en les projecteurs optiques 6.

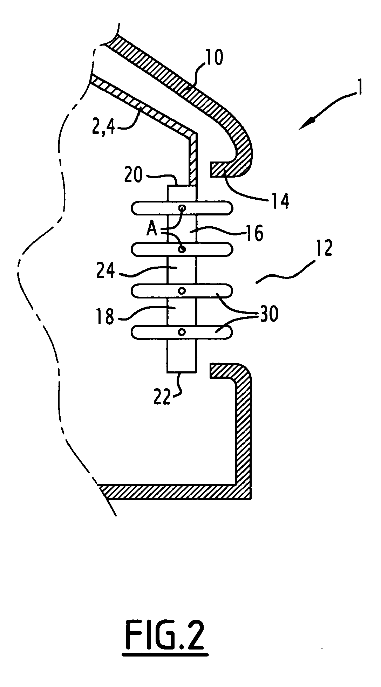

Comme représenté sur la Fig. 2, l'ensemble de carrosserie comprend en outre une peau de pare-choc 10 destinée à s'étendre sur la face avant de la caisse, en recouvrant au moins en partie le renfort de plastron 4.

La peau de pare-choc 10 comprend une ouverture 12 s'étendant sensiblement au centre de la peau de pare-choc 10 et permettant le passage de l'air de l'extérieur du véhicule automobile vers les organes disposés sous le capot du véhicule lorsque la peau de pare-choc 10 est montée sur la face avant de la caisse de véhicule automobile. L'ouverture 12 s'étend sensiblement verticalement sous le renfort de plastron 4.

L'ouverture 2 est délimitée par un bord 14 venu de matière avec la peau de pare-choc 1 et s'étendant sensiblement longitudinalement vers l'intérieur de la peau de pare-choc, c'est-à-dire vers les organes disposés sous le capot du véhicule lorsque la peau de pare-choc 10 est montée sur le véhicule.

Un cadre structurel 16 est réalisé d'un seul tenant avec le renfort de plastron 4 et est solidaire d'une partie extrême 18 inférieure du renfort de plastron 4 de sorte que le cadre structurel 16 s'étend sensiblement en regard de l'ouverture 12 de la peau de pare-choc 10, derrière ladite ouverture 12. Le cadre structurel 16 est par exemple sensiblement rectangulaire et comprend deux bords latéraux 18 s'étendant entre un bord supérieur 20 et un bord inférieur 22. Les bords 18, 20 et 22 délimitent une ouverture 24 sensiblement de même dimension que l'ouverture 12 de la peau de pare-choc 10. Selon un mode de réalisation, au moins un bord 18, 20 ou 22 du cadre structurel 16 est fixé au bord 14 de l'ouverture 12 de la peau de pare-choc 10 lors du montage de ladite peau 10.

Un système de volets pilotés en rotation est monté dans l'ouverture 24 du cadre 12 et fixé aux bords latéraux 18 de celle-ci. Ce système comprend une première pluralité de volets 26 montée par l'une des extrémité des volets 26 sur un côté d'une branche 28 et une deuxième pluralité de volets 30 montée par l'une des extrémités des volets 30 de l'autre côté de la branche 28. La branche 28 s'étend sensiblement au centre de l'ouverture 24 entre le bord inférieur 22 et le bord supérieur 20 du cadre 16, comme représenté sur la Fig. 1.

L'autre extrémité des volets 26 et 30 est montée sur un bord latéral 18 respectif de l'ouverture 24 du cadre 16. Ainsi, on obtient des volets 26 et 30 s'étendant sensiblement transversalement en travers de toute l'ouverture 24. Les volets 26 et 30 sont répartis sur la hauteur de l'ouverture 24. Selon le mode de réalisation représenté sur les figures, la première et la deuxième pluralité de volets comprennent chacune quatre volets répartis en hauteur sur la branche 28. En variante, le nombre de volets peut être différent, inférieur ou supérieur à quatre.

En variante, le système de volets ne comprend pas de branche 28 et une seule pluralité de volets s'étend en travers de toute l'ouverture 24 entre les bords latéraux 18. Selon une autre variante, le système de volets comprend une branche 28 et une seule pluralité de volets s'étendant en travers de toute l'ouverture.

Les volets 26 et 30 sont mobiles en rotation autour d'axes A respectifs sensiblement transversaux par rapport aux bords 18 de l'ouverture 24 et à la branche 28. Les volets sont ainsi mobile entre une position d'ouverture, représentée sur les figures, dans laquelle les volets s'étendent sensiblement horizontalement afin de permettre le passage de l'air par l'ouverture 24, et une position de fermeture (non représentée), dans laquelle les volets s'étendent sensiblement verticalement de sorte à obturer l'ouverture 24 et à empêcher le passage de l'air.

Le pilotage de la rotation des volets 26 et 30 se fait par un actionneur (non représenté) fixé sur la face interne du renfort de plastron 4 et relié par l'intermédiaire d'au moins un connecteur (non représenté) au système électrique du véhicule automobile.

L'ouverture ou la fermeture des volets 26 et 30 se fait selon les besoins en refroidissement des organes disposés sous le capot du véhicule automobile. Des capteurs de température de ces organes sont par exemple prévus et reliés à l'électronique du véhicule automobile. En fonction des signaux émis par ces capteurs, le système électrique est agencé pour piloter la rotation des volets 26 et 30 selon les besoins.

L'ensemble de carrosserie décrit ci-dessus ne nécessite pas la gestion d'un cadre structurel supplémentaire à rapporter sur la peau de pare-choc, le cadre 16 étant géré d'une seule pièce avec le renfort de plastron 4. Ceci permet de simplifier le montage du véhicule automobile et la gestion des stocks de pièces.

En outre, la grille généralement prévue en travers de l'ouverture n'est pas nécessaire puisque les volets remplissent le rôle de cette grille. Ainsi, le nombre de pièces et donc les coûts de fabrication sont réduits. Le nombre de pièces étant réduit, on obtient également un gain de masse du véhicule automobile.

Un effet esthétique particulier peut être obtenu par le pilotage des volets, l'aspect du véhicule étant différent selon que les volets sont dans leur position ouverte ou dans leur position fermée.

## Revendications

1. Ensemble de carrosserie (1) de véhicule automobile, comprenant au moins une pièce de carrosserie (2) destinée à s'étendre sur la face avant d'une caisse de véhicule automobile, ladite pièce de carrosserie (2) comprenant un cadre structurel (16) réalisé d'un seul tenant avec ladite pièce (2), une pluralité de volets (26, 30) étant fixée aux bords (18) dudit cadre (16) et s'étendant en travers dudit cadre (16) et étant montés en rotation autour d'axes (A) respectifs sensiblement transversaux entre une position d'ouverture où l'air peut traverser le cadre (16) et une position de fermeture dans laquelle les volets (26, 30) obturent le cadre (16), **caractérisé en ce qu'**il comprend en outre une peau de pare-choc (10), ladite peau (10) s'étendant au moins en partie au-dessus de la pièce de carrosserie (2), ladite peau (10) comprenant au moins une ouverture d'entrée d'air (12), ladite ouverture (12) s'étendant en regard du cadre structurel (16), ladite ouverture (12) étant délimitée par un bord (14) venu de matière avec ladite peau et s'étendant sensiblement longitudinalement vers l'intérieur de la peau de pare-choc et ladite ouverture (12) étant dépourvue d'une grille d'entrée d'air.

2. Ensemble de carrosserie selon la revendication 1, **caractérisé en ce qu'**une branche (28) s'étend sensiblement au centre du cadre (16) sensiblement perpendiculairement aux volets (26, 30), une première pluralité de volets (26) étant fixée à un bord (18) du cadre (16) et à un côté de ladite branche (28) et une deuxième pluralité de volets (30) étant fixée à un autre bord (18) du cadre (16) et à l'autre côté de ladite branche (28), lesdits volets (26, 30) étant montés en rotation autour d'axes (A) respectifs sensiblement transversaux.

3. Ensemble de carrosserie selon la revendication 1 ou 2, **caractérisé en ce que** la pièce de carrosserie (2) est un renfort de plastron (4), destiné à s'étendre sous l'avant du capot du véhicule automobile.

4. Ensemble de carrosserie selon l'une quelconque des revendications 1 à 3, **caractérisé en ce qu'**il comprend au moins un actionneur fixé à ladite pièce de carrosserie (2), ledit actionneur étant agencé pour entraîner la rotation des volets (26, 30).

5. Ensemble de carrosserie selon la revendication 4, **caractérisé en ce qu'**un connecteur électrique est relié audit actionneur.

6. Ensemble de carrosserie selon la revendication 4 ou 5, **caractérisé en ce que** l'actionneur est fixé sur la face interne de la pièce de carrosserie (2).

7. Véhicule automobile comprenant une caisse, un ensemble de carrosserie (1) étant fixé sur la face avant de ladite caisse, **caractérisé en ce que** l'ensemble de carrosserie (1) est selon l'une quelconque des revendications 1 à 6.

8. Véhicule automobile selon la revendication 7, lorsqu'elle dépend de l'une des revendications 4 à 6, **caractérisé en ce que** l'actionneur est connecté au système électrique dudit véhicule automobile.

9. Véhicule automobile selon la revendication 8, **caractérisé en ce que** la rotation des volets (26, 30) est commandée par le système électrique du véhicule automobile en fonction des besoins de refroidissement des organes du véhicule automobile présents sous le capot dudit véhicule.

## Claims

1. Body unit (1) of an automotive vehicle, comprising at least one body piece (2) designed to extend across the front face of an automotive vehicle shell, said body piece (2) comprising a structural frame (16) made in a single piece with said body piece (2), a plurality of slats (26, 30) being affixed to the edges (18) of said frame (16) and extending through said frame (16) and being mounted so as to rotate about respective essentially transverse axes (A) between an open position in which the air is able to pass through the frame (16) and a closed position in which the slats (26, 30) close the frame (16), **characterised in that** it further comprises a shock absorber skin (10), said skin (10) extending at least partially above the body piece (2), said skin (10) having at least one air inlet opening (12), said opening (12) extending facing the structural frame (16), said opening (12) being bounded by an edge (14) integrally cast with said skin and extending essentially longitudinally towards the interior of the shock absorber skin and said opening (12) having no air inlet grille.

2. Body unit as claimed in claim 1, **characterised in that** a branch (28) extends essentially to the centre of the frame (16), essentially perpendicular to the slats (26, 30), a first plurality of slats (26) being affixed to one edge (18) of the frame (16) and on one side of said branch (28) and a second plurality of slats (30) being affixed to another edge (18) of the frame (16) and on the other side of said branch (28), said slats (26, 30) being mounted so as to rotate about respective essentially transverse axes (A).

3. Body unit as claimed in claim 1 or 2, **characterised in that** the body piece (2) is a plastron-type reinforcement (4) designed to extend underneath the front of the bonnet of the automotive vehicle.

4. Body unit as claimed in any one of claims 1 to 3, **characterised in that** it has at least one actuator affixed to said body piece (2), said actuator being disposed so as to drive the rotation of the slats (26, 30).

5. Body unit as claimed in claim 4, **characterised in that** an electrical connector is connected to said actuator.

6. Body unit as claimed in claim 4 or 5, **characterised in that** the actuator is affixed to the internal face of the body piece (2).

7. Automotive vehicle comprising a shell, a body unit (1) being affixed to the front face of said shell, **characterised in that** the body unit (1) is as claimed in any one of claims 1 to 6.

8. Automotive vehicle as claimed in claim 7, dependent on one of claims 4 to 6, **characterised in that** the actuator is connected to the electrical system of said automotive vehicle.

9. Automotive vehicle as claimed in claim 8, **characterised in that** the rotation of the slats (26, 30) is controlled by the electrical system of the automotive vehicle as a function of the cooling requirements of the elements of the automotive vehicle disposed underneath the bonnet of said vehicle.

## Patentansprüche

1. Kraftfahrzeugskarosserieeinheit (1), mindestens ein Karosserieteil (2) umfassend, das dazu bestimmt ist, sich über die Vorderseite eines Kraftfahrzeugchassis zu erstrecken, wobei das genannte Karosserieteil (2) einen Rahmen (16) umfasst, der aus einem Stück mit dem genannten Teil (2) gefertigt ist, mehrere Latten (26, 30), die an den Rändern (18) des genannten Rahmens (16) befestigt sind und sich quer zum genannten Rahmen (16) erstrecken und jeweils um eine im Wesentlichen quer verlaufende Achse (A) zwischen einer Offen-Stellung, in der die Luft den Rahmen (16) durchqueren kann, und einer GeschlossenStellung, in der die Latten (26, 30) den Rahmen (16) verschließen, drehbar angebracht sind, **dadurch gekennzeichnet, dass** sie außerdem eine Stoßstangenverkleidung (10) aufweist, die mindestens teilweise oberhalb des Karosserieteils (2) verläuft, wobei die genannte Verkleidung (10) mindestens eine Luftzutrittsöffnung (12) umfasst, die dem Rahmen (16) gegenüberliegt, wobei die genannte Öffnung (12) von einem Rand (14) begrenzt wird, der mit der genannten Verkleidung einstückig verbunden ist und im Wesentlichen in Längsrichtung einwärts der Stoßstangenverkleidung verläuft, und die genannte Öffnung (12) nicht mit einem Lufteinlassgitter versehen ist.

2. Karosserieeinheit nach Patentanspruch 1, **dadurch gekennzeichnet, dass** ein Arm (28) im Wesentlichen in der Mitte des Rahmens (16) und im Wesentlichen senkrecht zu den Latten (26, 30) verläuft, wobei eine erste Gesamtheit von Latten (26) an einem Rand (18) des Rahmens (16) und an einer Seite des genannten Armes (28) befestigt ist, und eine zweite Gesamtheit von Latten (30) an einem anderen Rand (18) des Rahmens (16) und an der anderen Seite des genannten Armes (28) befestigt ist, wobei die genannten Latten (26, 30) jeweils um eine im Wesentlichen quer verlaufende Achse (A) drehbar montiert sind.

3. Karosserieeinheit nach Patentanspruch 1 oder 2, **dadurch gekennzeichnet, dass** das Karosserieteil (2) ein Frontschutz (4) ist, dazu bestimmt, unter dem Vorderteile der Motorhaube des Kraftfahrzeugs zu verlaufen.

4. Karosserieeinheit nach irgendeinem der Patentansprüche 1 bis 3, **dadurch gekennzeichnet, dass** sie mindestens ein Wirkglied umfasst, das am genannten Karosserieteil (2) befestigt ist, wobei das genannte Wirkglied derart angeordnet ist, dass es die Drehung der Latten (26, 30) bewirkt.

5. Karosserieeinheit nach Patentanspruch 4, **dadurch gekennzeichnet, dass** ein elektrischer Verbinder mit dem genannten Wirkglied verbunden ist.

6. Karosserieeinheit nach Patentanspruch 4 oder 5, **dadurch gekennzeichnet, dass** das genannte Wirkglied an der Innenseite des Karosserieteils (2) befestigt ist.

7. Kraftfahrzeug, eine Karosserie umfassend, eine Karosserieeinheit (1), die an der Vorderseite der genannten Karosserie befestigt ist, **dadurch gekennzeichnet, dass** die Karosserieeinheit (1) irgendeinem der Patentansprüche 1 bis 6 entspricht.

8. Kraftfahrzeug nach Patentanspruch 7, wenn er von einem der Patentansprüche 4 bis 6 abhängig ist, **dadurch gekennzeichnet, dass** das Wirkglied an das elektrische System des genannten Kraftfahrzeugs angeschlossen ist.

9. Kraftfahrzeug nach Patentanspruch 8, **dadurch gekennzeichnet, dass** die Drehung der Latten (26, 30) durch das elektrische System des Kraftfahrzeugs in Abhängigkeit von den Kühlungserfordernissen der Organe des Kraftfahrzeugs gesteuert wird, die sich unter der Motorhaube des genannten Fahrzeugs befinden.
